# EUROPEAN PATENT APPLICATION

(11) **EP 2 977 917 A1**
(43) Date of publication of application: **27.01.2016**
(21) Application number: 15163568.7
(22) Date of filing: 14.04.2015
(51) Int. Cl.: G06F 17/30

(54) **ENSURING CONSISTENCY OF DERIVED DATA IN A DISTRIBUTED STORAGE SYSTEM**

(30) Priority: 25.07.2014 US 201414341389
(71) Applicant: LinkedIn Corporation, Mountain View, California 94043 (US)
(72) Inventor: Sun, Yun, Mountain View, CA California 94043 (US); Sebastian, Abraham, Brooklyn, NY 11218 (US); Mohsenzadeh, Mohammad, Palo Alto, CA 94303 (US)
(74) Representative: D Young & Co LLP

(57) **Abstract**

A system, methods, and apparatus are provided for ensuring consistency of derived data, relative to primary data, in a distributed data storage system. Primary data and derived data are stored on and/or managed by separate components of the data storage system, such as different storage engines. Primary data are written and updated as specified in write requests, which may be queries directed at the primary storage engine. Results of primary data writes are delivered directly to the derived storage engine. If an update to derived data fails, a record is made; if the update succeeds, any recorded failed writes to the same data are cleared. The derived storage engine also receives write results via a change capture stream of events affecting the primary data, and can use these copies of write results to fix failed updates and to clear failures from the failed write records.

## Description

### FIELD

This disclosure relates to the field of computer systems. More particularly, a system, methods, and apparatus are provided for helping to ensure the consistency of derived data within a distributed storage system.

### BACKGROUND

Large collections of data, such as traditional RDBMS (Relational Database Management Systems), often include primary data (or master data) and derived data (or secondary data). Derived data are data that are changed or computed based on the primary data, and may include secondary or local indices, counters, specific columns or fields, etc. When master data is updated (e.g., as part of a data query), associated derived data (if any) is automatically updated as well.

Because a traditional RDBMS stores all data (including primary and derived data) in a monolithic storage engine, updates to master data and associated derived data within an RDBMS can be performed as reliable transactions that satisfy the ACID (Atomicity, Consistency, Isolation, and Durability) requirements. Therefore, there is no little or no concern that the derived data (or the primary data) will be in an inconsistent state when later read.

However, many data-processing environments now employ distributed storage architectures, and primary data and associated derived data may be stored remotely from each other - on different devices, with different storage engines, etc. Reliable transactions would be very difficult to enforce in these environments because of the unavoidable communication latencies, the additional possible points of failure that must be transited, the ramifications of long-term locks on data, and/or other factors specific to particular architectures. Therefore, it may be difficult to ensure consistency of derived data within a distributed data storage system after an update to its associated primary data.

### SUMMARY

The invention is defined in the appended claims.

### DESCRIPTION OF THE FIGURES

Figure 1 is a block diagram depicting a computing environment, in accordance with some embodiments.
Figures 2A-B are a flow chart illustrating a method of ensuring consistency of derived data in a distributed data storage system, in accordance with some embodiments.
Figure 3 is a block diagram of an apparatus for ensuring consistency of derived data in a distributed data storage system, in accordance with some embodiments.

### DETAILED DESCRIPTION

The following description is presented to enable any person skilled in the art to make and use the disclosed embodiments, and is provided in the context of one or more particular applications and their requirements. Various modifications to the disclosed embodiments will be readily apparent to those skilled in the art, and the general principles defined herein may be applied to other embodiments and applications without departing from the scope of those that are disclosed. Thus, the present invention or inventions are not intended to be limited to the embodiments shown, but rather are to be accorded the widest scope consistent with the disclosure.

In some embodiments, a system, methods, and apparatus are provided for ensuring consistency of derived data. The system is or includes a distributed data storage system in which different portions of data are stored in different locations, on different data storage devices, under the control of different data storage engines, etc. In particular, primary data are stored in one repository and are managed by a primary storage engine (e.g., a database management system), and derived data are stored in another repository and are managed by a derived storage engine (e.g., a different database, a file system). Derived data and a derived storage engine may alternatively be termed secondary data and a secondary storage engine, respectively, and the terms "data storage engine" and "storage engine" are used interchangeably.

In this system, primary data are updated as specified in queries and write operations submitted to the primary storage engine, and derived data associated with the updated primary data (if any) are updated automatically after a successful write to the primary data. The updates to the primary data and associated derived data are not performed as reliable transactions (i.e., transactions that satisfy the ACID properties), but the methods provided herein ensure eventual consistency of the derived data and still allow read-after-write, meaning that a user or client can query the associated derived data after the primary data is written, and can expect to receive correct data.

In some embodiments, a method of ensuring consistency of derived data within a distributed data storage system involves synchronously sending to the derived data storage engine the results of writes to primary data, meaning that the results are sent directly to the derived data storage engine, from the primary data storage engine, in the order in which the writes were applied to the primary data. Results are sent to the derived data storage engine only if the corresponding write to primary data was successful.

In these embodiments, the result of a write to primary data includes a key, a value for the key, and a sequence number. The key identifies the field(s), column(s), records, or other portion of primary data that was/were updated in the primary storage engine, the value provides the new value(s) of the key fields/columns/records, and the sequence number is a timestamp produced by a logical clock, such as a Lamport timestamp. As indicated below, this information is sufficient for the derived storage engine to identify and correctly update derived data associated with the key.

Upon receipt of a write result sent directly from the primary data storage engine, the secondary data storage engine updates the associated derived data. If the update to the associated derived data fails, a record is made in a "FailedWritesRecorder" data structure, which may take any suitable form (e.g., list, array, queue), and an appropriate failure message is returned (e.g., to the primary data storage engine). The entire write result received from the primary storage engine may be stored in the FailedWritesRecorder when an update to derived data fails, or just some subset (e.g., key, sequence number). If, however, a record with the same key already exists in the FailedWritesRecorder, the record may simply be updated with the sequence number of the just-failed update attempt, because any earlier failures are now moot.

If the update to the associated secondary data succeeds, an appropriate success message is returned and, in addition, any records in the FailedWritesRecorder that are associated with the same data are purged or erased. In particular, the derived storage engine purges records that have the same key as the key of the write result that was successfully applied.

In addition to transmitting write results directly to the secondary storage engine, the primary storage engine also records primary data writes in a "change capture stream". In these embodiments, and as the name implies, this data stream captures all changes to primary data (or substantially all changes), possibly in the same form as the result sent directly to the derived storage engine (e.g., as a tuple in the form {key, value, sequence number}). Various entities may subscribe or listen to the change capture stream, including the derived data storage engine.

In particular, the derived data storage engine subscribes to the change capture stream and therefore not only receives primary write results directly (from the primary storage engine), but also receives them (later in time) via the stream. Upon receipt of a write result via the change capture stream, the derived storage engine determines whether it has any records in the FailedWritesRecorder that have the same key as the result extracted from the stream. If not, the result is ignored.

But, if there is a record in the FailedWritesRecorder that has the same key and the same sequence number as the write result received from the change capture stream, the derived data storage engine will re-apply the result to update the derived data, and will clear the record from the FailedWritesRecorder. This update may be attempted multiple times until it succeeds.

As described above, the derived storage engine clears the FailedWritesRecorder when it successfully applies a write result received directly from the primary data storage engine (or via the change capture stream). Successful application of a given primary write result for a given key makes irrelevant any previous failed updates that involve the same key. And, because the write results are received synchronously (both at the derived data storage engine and the change capture stream), there is no danger that an update associated with an earlier write to primary data will be applied over an update associated with a later write.

Therefore, it follows that by the time the derived storage engine receives from the change capture stream a write result having a particular key, write results tied to the same key and that resulted from earlier writes at the primary data storage engine will already have been received and attempted at the derived data storage engine. Thus, the FailedWritesRecorder should not have a record with the same key as a result currently extracted from the change capture stream and an older or earlier sequence number.

The FailedWritesRecorder may, however, have a record with the same key and a newer or more recent sequence number than a result just received from the change capture stream. In this case, the derived storage engine ignores the extracted result. The derived data will instead be corrected either when a new write result is received directly from the primary storage engine and is applied successfully, or when the write result corresponding to the FailedWritesRecorder record is received from the stream.

Thus, in some embodiments of the invention, writes (or attempted writes) to derived data are performed synchronously, in the order that writes to associated primary data were successfully performed. Correction or repair of derived data, after an attempted write to derived data fails, is performed asynchronously, either when a later write is received directly or when notification of the same write is received through the change capture stream.

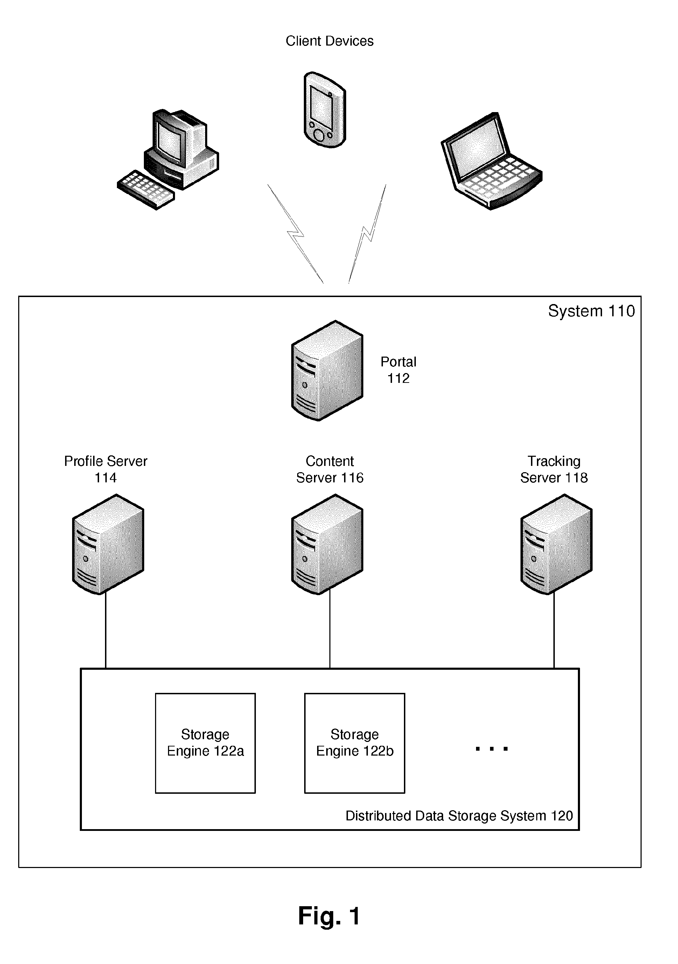

Figure 1 is a block diagram of a computing environment that features a distributed data storage system and that may ensure consistency of derived data as described herein, according to some embodiments.

In these embodiments, system 110 is (or is part of) a data center or other collection of computer resources that hosts a professional or social networking service that helps members create, develop, and maintain professional (and personal) relationships, as provided by LinkedIn^{®} Corporation for example. In other embodiments, system 110 may support or host an application, service, or web site that stores, maintains, and publishes virtually any type or types of content.

Users of a service or services hosted by system 110 connect to the system via client devices, which may be stationary (e.g., desktop computer, workstation) and/or mobile (e.g., smart phone, tablet computer, laptop computer). The client devices operate suitable client applications, such as a browser program or an application designed specifically to access a service offered by system 110, in order to display content served to them by the system.

Content served by system 110 includes status updates, messages, advertisements, offers, announcements, job listings, news, informative articles, activities of other users, and so on, and may be or may include any type of media (e.g., text, graphics, image, video, audio). Content items published or served by system 110 may include content generated by users of the system's services and/or content supplied by third parties for delivery to users of those services.

Users of system 110 may be termed members because they may be required to register with the system in order to fully access the available service or services. Members may be identified and differentiated by username, electronic mail address, telephone number, and/or some other unique identifier.

Interactive user/member sessions are generally made through portal 112, which may comprise an application server, a web server, and/or some other gateway or entry point. The portal through which a given session is established may depend on the member's device or method of connection. For example, a user of a mobile client device may connect to system 110 via a different portal (or set of portals) than a user of a desktop or workstation computer.

System 110 also includes profile server 114, content server 116, tracking server 118, and distributed data storage system 120, which includes multiple storage engines 122.

Different storage engines may be of different types or the same type, and a give storage engine may be remote from another storage engine. Illustrative storage engines include Oracle RDBMS (Relational Database Management System), MySQL, a file system, and/or other entities that include or that manage data repositories. Individual data storage devices (e.g., disks, solid-state drives) may be part of individual storage engines 122 and/or may be separate entities coupled to engines 122 within distributed data storage system 120.

Profile server 114 maintains profiles, which may be stored in distributed data storage system 120 or elsewhere, of members of the service(s) hosted by system 110. An individual member's profile may reflect any number of attributes or characteristics of the member, including personal (e.g., gender, age or age range, interests, hobbies, member ID), professional (e.g., employment status, job title, functional area or industry, employer(s), skills, endorsements, professional awards), social (e.g., organizations the user is a member of, geographic area of residence, friends), educational (e.g., degree(s), university attended, other training), etc. A member's profile, or attributes or dimensions of a member's profile, may be used in various ways by system components (e.g., to identify who sent a message, to identify a recipient of a status update, to select content to serve to the member or an associated member, to record a content-delivery event).

Organizations may also be members of the service (i.e., in addition to individuals), and may have associated descriptions or profiles comprising attributes such as industry (e.g., information technology, manufacturing, finance), size, location, goal, etc. An "organization" may be a company, a corporation, a partnership, a firm, a government agency or entity, a not-for-profit entity, an online community (e.g., a user group), or some other entity formed for virtually any purpose (e.g., professional, social, educational).

Content server 116 maintains content items for serving to members, an index of the content items, and/or other information useful in serving content to members. Some or all of the content items and indexes may be stored within distributed data storage system 120 and/or elsewhere (e.g., a content store not depicted in Figure 1). Illustratively, content server 116 may serve on the order of hundreds of millions of items every day. Content server 116 may include a recommendation module for recommending content to serve to a member, or recommendations may be generated by some other component of system 110 (not depicted in Figure 1).

Tracking server 118 monitors and records activity of system 110 and/or members, in distributed data storage system 120 and/or elsewhere. For example, whenever content is served from the system (e.g., to a client device), the tracking server is informed of what is served, to whom (e.g., which member), when it was served, and/or other information. Similarly, the tracking server also receives notifications of member actions regarding content, to include identities of the member and the content acted upon, the action that was taken, when the action was taken, etc. Illustrative actions that may be captured include, but are not limited to, clicks/taps/pinches (on the content, on a logo or image), conversions, follow-on requests, visiting a page associated with a subject or provider of the content, taking some other action regarding the content (e.g., commenting on it, sharing it, following its provider, liking it), and so on.

Thus, for each of multiple significant types of actions, an event is fired, delivered to a tracking server, and may be stored in distributed data storage system 120. Some events are received from system components while others are received from client devices and/or other devices external to system 110. In embodiments described herein, tracking server 118 receives massive numbers of events. In some illustrative scenarios, the number of events received at tracking servers may exceed one billion in a single day.

System 110 may include other components not illustrated in Figure 1. For example, in some embodiments, system 110 includes a connection server that stores data representing members' associations/connections/relationships. Illustratively, the members' associations may be stored as a graph in which each node corresponds to one member or user, and each edge between two nodes corresponds to a relationship between the members/users represented by the two nodes. The network of members of a service offered by system 110 may number in the tens or hundreds of millions, and the graph of members' associations may be stored on one or more components of distributed data storage system 120 and/or elsewhere.

Members of a service hosted by system 110 have corresponding pages (e.g., web pages, content pages) on the system, which they may use to facilitate their activities with the system and with each other, to form connections/relationships with other members, inform friends and/or colleagues of developments in their lives/careers, etc. These pages (or information provided to members via these pages) are available to some or all other members. Members' pages may be stored within distributed data storage system 120 and/or elsewhere.

Functionality of system 110 may be distributed among its components in an alternative manner, such as by merging or further dividing functions of one or more components, or may be distributed among a different collection of components. Yet further, while depicted as separate and individual hardware components (e.g., computer servers) in Figure 1, one or more of portal 112, profile server 114, content server 116, and tracking server 118 may alternatively be implemented as separate software modules executing on one or more computer servers. Thus, although only a single instance of a particular component of system 110 may be illustrated in Figure 1, it should be understood that multiple instances of some or all components may be utilized.

It should be understood that distributed data storage system 120 and storage engines 122 may store some or all of the data used by other components of system 110.

For example, in one illustrative implementation, primary data stored in the distributed data storage system is or includes member profiles, with member IDs as the key, and the derived data could be a secondary index that allows one to look-up a member ID from one or more fields of his or her profile. In this implementation, whenever a given member updates his or her profile, an embodiment of the invention may be applied to ensure the derived data are correctly updated.

In another illustrative implementation, primary data includes articles (e.g., from newspapers, periodicals, blogs), with article identifiers as the key, and the derived or secondary data could be photographs, images, and/or other (graphical) content related to or associated with the articles. In this implementation, when a new article is received or posted, or an existing article is edited, a recommendation module may be invoked to identify one or more graphics to associate with the article as secondary data.

In another illustrative implementation, primary data includes records of connections between members, with the key comprising identifiers of one or both members that share a connection, and secondary data could be counters of connections for each member. Whenever two members establish a new connection and the connection is added to a repository of connection data (e.g., a database or other repository of a social graph), secondary data for both members are updated.

In yet another illustrative implementation, primary data includes messages to, from, and/or between members (e.g., electronic mail messages, instant messages, posts on members' pages), with message IDs as key. In this implementation, derived data could include lists of message IDs for each member, for each discussion thread, for each post to a member page, etc.

Thus, within distributed data storage system 120, some data may be considered primary data that is updated in response to queries or write operations submitted to storage system 120 (from client devices, from system operators or components), such as when an event is recorded, when a member updates his or her profile, when a new connection between members is created, etc. Data storage system 120 also includes derived or secondary data, which is updated automatically when associated primary data is updated and which may or may not be directly written by user queries.

In embodiments of the invention reflected in Figure 1, primary data for one or more applications or services are managed by storage engine 122a, while associated secondary data are managed by storage engine 122b. Thus, methods described herein are applicable to systems in which primary data and derived data are stored on separate devices/components/machines and may or may not be remote from each other. However, the methods may also be applied when primary and derived data are stored together.

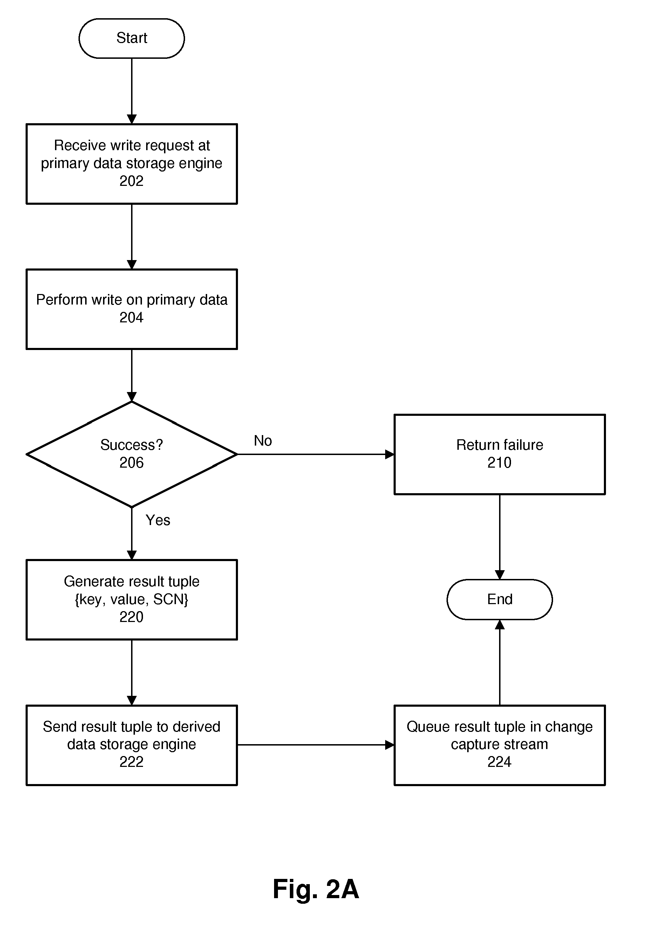

Figures 2A-B comprise a flow chart illustrating a method of ensuring consistency of derived data within a distributed data storage system, according to some embodiments.

In these embodiments, the distributed data storage system includes multiple storage engines, one of which manages primary data for a particular application or service, and one of which manages derived or secondary data for the same application or service. The storage engines may or may not be remote in relation to each other.

In operation 202, the primary data storage engine receives a write request, possibly as part of a query on the data of the application or service. The request may be received directly from a user/client device, or may be received via some other component of a data center or system that features the distributed data storage system and that hosts the application or service.

In operation 204, the primary data storage engine executes the requested write on the specified primary data, which changes values in one or more columns (or fields) and records.

In operation 206, the primary data storage engine determines whether the write was successful. If so, the method advances to operation 220. Otherwise, in operation 210 a failure message is returned to the originator of the write request and the method ends.

In operation 220, a result of the primary data write operation is generated, illustratively in the form of a tuple comprising a key, a value for the key, and a sequence number SCN. The key identifies the portion of primary data that was written, by column(s), field(s), row(s), and/or other identifiers, while the value is the value that is now stored in the key portion of the primary data.

In these embodiments the sequence number is a logical timestamp that uniquely and sequentially identifies write operations successfully executed on the primary data at the primary data storage engine. Thus, the time-based order of any two write operations can be determined by comparing their sequence numbers. The operation having the earlier or older timestamp was performed before the operation that has the later or newer timestamp.

In operation 222, the result tuple is forwarded directly to the storage engine that maintains derived data associated with the primary data that was written (i.e., a derived data storage engine). It may be noted that, in some implementations, different storage engines may store different partitions of derived data for the application or service.

In operation 224, the primary data storage engine also adds the write result to a "change capture stream," which is a data stream of results of successful write operations applied to the primary data. Various entities, including the derived data storage engine, subscribe to this stream.

Figure 2A thus demonstrates actions of the primary data storage engine according to some embodiments, which may be depicted as ending after operation 224, as far as the write request received in operation 202 is concerned, except possibly for a success or failure message from the derived data storage engine.

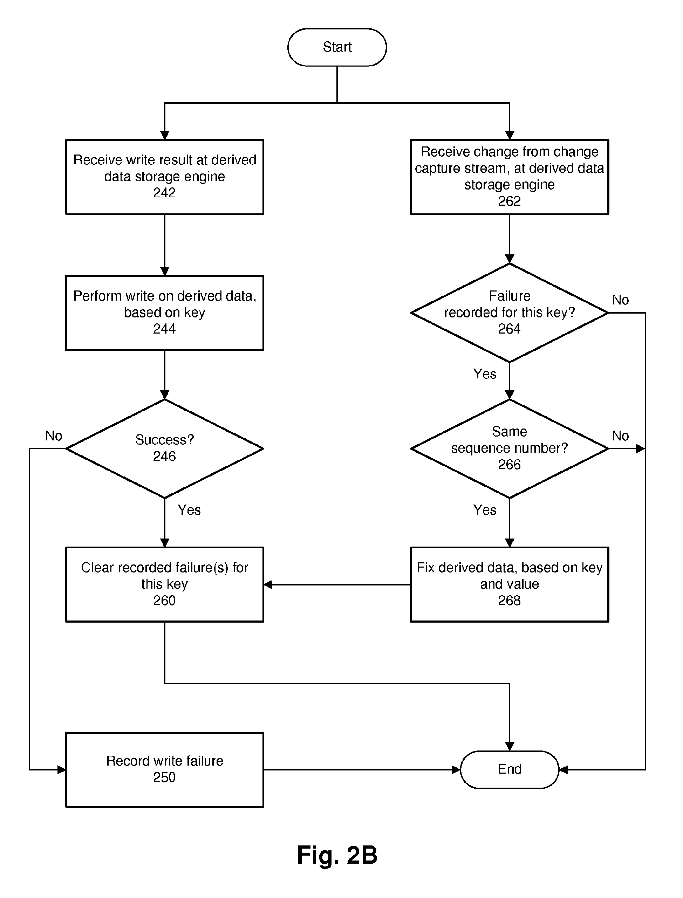

Figure 2B depicts actions of the derived data storage engine. Although illustrated as discrete sets of operations for the two storage engines, the operations shown in Figs. 2A-B should be understood to be continually performed for different write requests as the application or service continues operation. It will be understood, therefore, that operations 242 and 262 of Figure 2B flow logically from operations 222 and 224, respectively, of Figure 2A.

In operation 242, the derived data storage engine receives the result of the primary write, which includes the primary data key, the new value for the key, and the sequence number of the primary write operation.

In operation 244, the derived storage engine attempts to write to or update derived data that are associated with the primary data key. In these embodiments, the derived data storage engine is programmed with instructions regarding which derived data to update, and how to update that data, based on the key and the value received with the primary write result.

In operation 246 the derived data storage engine determines whether the update was successful. If not, the method continues at operation 250; otherwise, the method advances to operation 260.

In operation 250, the derived data storage engine records the failure in a FailedWritesRecorder data structure (e.g., a list, an array, a queue). The engine determines whether the FailedWritesRecorder already includes a record having the same key as was received in the write result received in operation 242. If so, that record is updated to change its existing (older) sequence number with the sequence number of the write result received in operation 242. If not, some or all of the write result is stored as a new record. In the illustrated embodiment, the FailedWritesRecorder rarely, if ever, contains more than one record for a particular key.

After operation 250, the method ends, although it may instead be considered to advance to operation 262 when the same write result is received via the change capture stream.

In operation 260, because the write to the associated derived data succeeded, previous failures associated with the same key are moot; therefore any record(s) in the FailedWritesRecorder structure that have the same key are purged or deleted. After operation 260, the illustrated method ends as far as it concerns the present primary data write result, although a success message may be returned to the primary data storage engine.

In operation 262, the derived data storage engine receives the same write result, but through the change capture data stream instead of directly from the primary data storage engine.

In operation 264, the derived data storage engine determines whether any records in the FailedWritesRecorder have the same key as the key in the write result. If not, the method ends for this write result. If so, the method continues at operation 266.

In operation 266, the derived storage engine determines whether the failed write record found in operation 264 has the same sequence number as the sequence number of the write result. If not, the method ends; otherwise, the method continues at operation 268.

In operation 268, the key and value of the write result are used to correct or fix the associated derived data. If necessary, this repair may be attempted multiple times until it succeeds. If it cannot succeed after several or many attempts, a serious error may exist (e.g., a disk failure), which will be determined by other processes and which cannot be repaired by the derived data storage engine. If the storage engine or the application or service that corresponds to the current write attempt has to be restarted, the change capture stream can be used to ensure consistency of primary data and derived data.

After operation 268, the illustrated method proceeds to operation 260 to clear the FailedWritesRecorder of the failed write record.

In some embodiments, whenever the FailedWritesRecorder is empty, the derived data storage engine may ignore events within the change capture stream (e.g., in operation 262) or may even un-subscribe from the stream. In the latter case, the engine would re-subscribe the next time a derived data update fails.

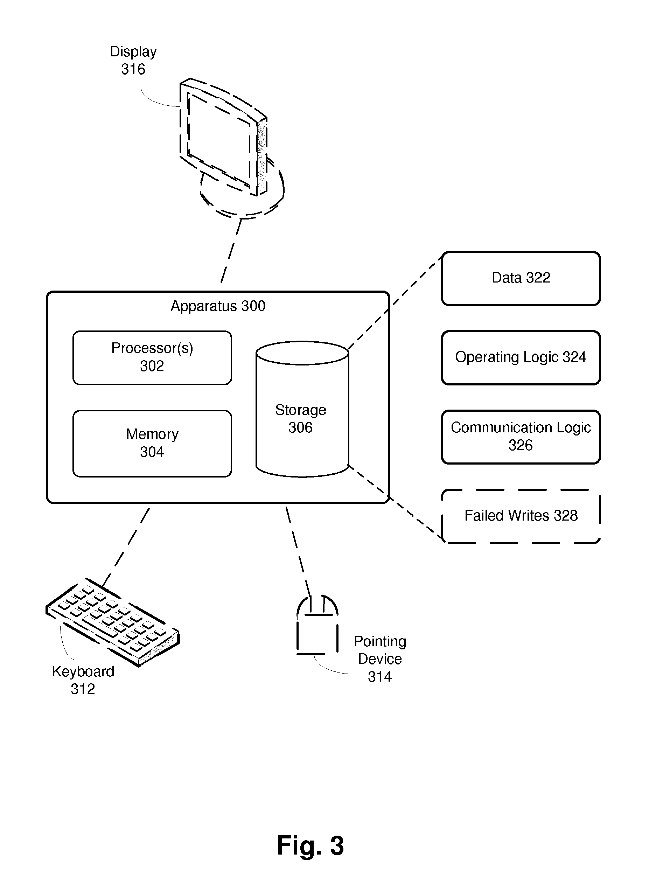

Figure 3 depicts an apparatus for ensuring consistency of derived data within a distributed data storage system, according to some embodiments.

Apparatus 300 of Figure 3 includes processor(s) 302, memory 304, and storage 306, which may comprise one or more optical, solid-state, and/or magnetic storage components. Storage 306 may be local or remote to the apparatus. Apparatus 300 can be coupled (permanently or temporarily) to keyboard 312, pointing device 314, and display 316.

Multiple apparatuses 300 may store related or associated data, and cooperate to handle and apply queries on the data, including read and write operations. For example, one apparatus may store primary data of an application or service, while another apparatus stores derived data for the same application or service.

In addition to data 322, storage 306 also stores logic that may be loaded into memory 304 for execution by processor(s) 302. Such logic includes operating logic 324 and communication logic 326. In other embodiments, these logic modules may be combined or divided to aggregate or divide their functionality as desired. In addition, storage 306 and/or memory 304 record failed writes to data 322, as failed writes (or failed updates) 328, if data 322 comprises derived data.

Operating logic 324 comprises processor-executable instructions that function differently depending on the type of data 322. When apparatus 300 stores primary data, the operating logic serves to receive original write requests/queries regarding data 322, send results of successful writes to other apparatus(es) storing associated derived data, if any, and write the results to a change capture stream to which apparatus 300 subscribes.

When apparatus 300 stores derived data, the operating logic serves to receive results of writes to primary data executed on one or more other apparatuses, write to derived data 322 as warranted by the primary write results, record failed writes in failed writes 328, and clear failed writes when the failures have been corrected or have become moot.

Communication logic 326 comprises processor-executable instructions for sending or receiving write requests and/or results of writes, depending on whether the apparatus stores primary or derived data, and for sending or receiving write results to or from a change capture stream.

In some embodiments, apparatus 300 performs some or all of the functions ascribed to one or more components of system 110 of Figure 1, such as storage engines 122.

An environment in which one or more embodiments described above are executed may incorporate a general-purpose computer or a special-purpose device such as a handheld computer or communication device. Some details of such devices (e.g., processor, memory, data storage, display) may be omitted for the sake of clarity. A component such as a processor or memory to which one or more tasks or functions are attributed may be a general component temporarily configured to perform the specified task or function, or may be a specific component manufactured to perform the task or function. The term "processor" as used herein refers to one or more electronic circuits, devices, chips, processing cores and/or other components configured to process data and/or computer program code.

Data structures and program code described in this detailed description are typically stored on a non-transitory computer-readable storage medium, which may be any device or medium that can store code and/or data for use by a computer system. Non-transitory computer-readable storage media include, but are not limited to, volatile memory; non-volatile memory; electrical, magnetic, and optical storage devices such as disk drives, magnetic tape, CDs (compact discs) and DVDs (digital versatile discs or digital video discs), solid-state drives, and/or other non-transitory computer-readable media now known or later developed.

Methods and processes described in the detailed description can be embodied as code and/or data, which may be stored in a non-transitory computer-readable storage medium as described above. When a processor or computer system reads and executes the code and manipulates the data stored on the medium, the processor or computer system performs the methods and processes embodied as code and data structures and stored within the medium.

Furthermore, the methods and processes may be programmed into hardware modules such as, but not limited to, application-specific integrated circuit (ASIC) chips, field-programmable gate arrays (FPGAs), and other programmable-logic devices now known or hereafter developed. When such a hardware module is activated, it performs the methods and processed included within the module.

The foregoing embodiments have been presented for purposes of illustration and description only. They are not intended to be exhaustive or to limit this disclosure to the forms disclosed. Accordingly, many modifications and variations will be apparent to practitioners skilled in the art. The scope is defined by the appended claims, not the preceding disclosure.

## Claims

1. A method of ensuring consistency of derived data in a distributed data storage system comprising multiple storage engines, the method comprising:
at a first storage engine managing primary data:
executing a request to write a portion of the primary data identified by a key; and
transmitting a result of the executed write to a second storage engine that manages derived data associated with the key; and
at the second storage engine:
receiving the result of the executed write, including the key;
attempting to update the derived data associated with the key;
if the update attempt fails, recording the key in a collection of failed updates; and
if the update attempt succeeds, purging the collection of failed updates of records comprising the key, if any.

2. The method of claim 1, further comprising:
at the first storage engine, writing the result of the executed write to a stream of primary data changes, wherein the result includes the key, a value for the key, and a sequence number of the executed write; and
at the second storage engine:
receiving a first entry from the stream of primary data changes, the first entry including a first key and a first sequence number; and
if the collection of failed updates includes a record comprising the first key and the first sequence number:
updating derived data associated with the first key; and
purging the collection of failed updates of records comprising the first key.

3. The method of claim 1 or 2, wherein recording the key in the collection of failed updates comprises:
if the collection of failed updates includes an earlier record comprising the key, overwriting an earlier sequence number of the earlier record with the sequence number; and
if the collection of failed updates does not include an earlier record comprising the key, writing to the collection of failed updates a record comprising the result of the executed write.

4. The method of any preceding claim, wherein each record of a failed update to the derived data, in the collection of failed updates, comprises the result of a corresponding executed write to the primary data.

5. The method of any preceding claim, wherein sequence numbers of write results are logical timestamps.

6. The method of any preceding claim, wherein:
the first storage engine and the second storage engine are remote from each other.

7. The method of any preceding claim, wherein:
the first storage engine is a database; and
the second storage engine is a file system.

8. A computer program comprising program instructions in machine readable format that when executed by a computer system cause the computer system to perform the method of any preceding claim.

9. A system for ensuring consistency of derived data, comprising:
a primary data storage engine managing primary data and comprising:
at least one processor; and
a first non-transitory computer readable medium storing instructions that, when executed by the at least one processor, cause the primary data storage engine to:
execute a request to write a portion of the primary data identified by a key; and
transmit a result of the executed write to a derived data storage engine; and the derived data storage engine managing the derived data and comprising:
one or more processors; and
a second non-transitory computer readable medium storing instructions that, when executed by the one or more processors, cause the derived data storage engine to:
receive the result of the executed write, including the key;
attempt to update the derived data associated with the key;
if the update attempt fails, record the key in a collection of failed updates; and
if the update attempt succeeds, purge the collection of failed updates of records comprising the key, if any.

10. The system of claim 9, wherein:
the first non-transitory computer readable medium further stores instructions that, when executed by the at least one processor, cause the primary data storage engine to:
write the result of the executed write to a stream of primary data changes, wherein the result includes the key, a value for the key, and a sequence number of the executed write; and
the second non-transitory computer readable medium further stores instructions that, when executed by the one or more processors, cause the derived data storage engine to:
receive a first entry from the stream of primary data changes, the first entry including a first key and a first sequence number; and
if the collection of failed updates includes a record comprising the first key and the first sequence number:
update derived data associated with the first key; and
purge the collection of failed updates of records comprising the first key.

11. The system of claim 9 or 10, wherein recording the key in the collection of failed updates comprises:
if the collection of failed updates includes an earlier record comprising the key, overwriting an earlier sequence number of the earlier record with the sequence number; and
if the collection of failed updates does not include an earlier record comprising the key, writing to the collection of failed updates a record comprising the result of the executed write.

12. The system of any of claims 9 to 11, wherein each record of a failed update to the derived data, in the collection of failed updates, comprises the result of a corresponding executed write to the primary data.

13. The system of any of claims 9 to 12, wherein sequence numbers of write results are logical timestamps.

14. The system of any of claims 9 to 13, wherein:
the primary data storage engine and the derived data storage engine are remote from each other; and/or
the primary data storage engine is a database; and
the derived data storage engine is a file system.

15. An apparatus for ensuring consistency of derived data within a distributed data storage system, comprising:
a first physical storage device storing primary data of an online application;
a second physical storage device storing derived data of the online application;
one or more processors;
derived data update logic comprising instructions that, when executed by the one or more processors, cause the apparatus to:
attempt to update the stored derived data based on a result of an executed write to a portion of the primary data identified by a first key;
wherein the result comprises the first key, a first value for the key, and a first sequence number of the executed write;
failed update logic comprising instructions that, when executed by the one or more processors, cause the apparatus to write the result to a collection of failed updates if the attempt to update the stored derived data fails; and
change capture logic comprising instructions that, when executed by the one or more processors, cause the apparatus to:
extract a primary data change from a stream of primary data changes, the extracted primary data change comprising a key and a sequence number; and
invoking the derived data update logic if the key matches the first key and the sequence number matches the first sequence number;
and optionally, if the attempt to update the stored derived data succeeds, clear from the collection of failed updates any records that include the first key.
